Europäisches Patentamt

European Patent Office

Office européen des brevets

(11) Veröffentlichungsnummer: **0 351 612**
**A2**

(12) EUROPÄISCHE PATENTANMELDUNG

(21) Anmeldenummer: 89112033.9

(51) Int. Cl.⁴: **C09D 5/44 , C08G 18/84**

(22) Anmeldetag: 01.07.89

(30) Priorität: 20.07.88 DE 3824552

(43) Veröffentlichungstag der Anmeldung:
24.01.90 Patentblatt 90/04

(84) Benannte Vertragsstaaten:
AT BE CH DE ES FR GB IT LI NL SE

(71) Anmelder: BASF Lacke + Farben
Aktiengesellschaft
Max-Winkelmann-Strasse 80
D-4400 Münster(DE)

(72) Erfinder: Lawrenz, Dirk, Dr.
Moerikestrasse 3
D-7257 Ditzingen 4(DE)
Erfinder: Schupp, Hans, Dr.
Jean-Voelker-Strasse 40
D-6520 Worms(DE)
Erfinder: Schwerzel, Thomas, Dr.
Budapester Strasse 51
D-6700 Ludwigshafen(DE)

(74) Vertreter: Welzel, Gunther, Dr. et al
c/o BASF Aktiengesellschaft
Carl-Bosch-Strasse 38
D-6700 Ludwigshafen(DE)

(54) Hitzehärtbares Überzugsmittel mit niedrigen Einbrenntemperaturen.

(57) Die vorliegende Erfindung betrifft ein hitzehärtbares Überzugsmittel für die kathodische Elektrotauchlackierung, das durch Protonieren mit Säure wasserverdünnbar ist, enthaltend
   A) 50 bis 95 Gew.-% eines primäre und/oder sekundäre Aminogruppen enthaltenden Polymerisations-, Polykondensations- oder Polyadditionsproduktes als Bindemittel
   B) 5 bis 50 Gew.-% eines Vernetzungsmittels, erhältlich durch Umsetzung eines
      a) Polyurethans mit
      b) Formaldehyd oder einer Formaldehyd liefernden Verbindung und
      c) einem oder mehreren sekundären aliphatischen Aminen.

EP 0 351 612 A2

## Hitzehärtbares Überzugsmittel mit niedrigen Einbrenntemperaturen

Die vorliegende Erfindung betrifft hitzehärtbare Überzugsmittel für die kathodische Elektrotauchlackierung, enthaltend ein primäre und/oder sekundäre Aminogruppen aufweisendes Bindemittel (A) und Vernetzungsmittel (B), das durch Umsetzung eines Polyurethans mit Formaldehyd und einem sekundären aliphatischen Amin erhältlich ist.

Überzugsmittel für die kathodische Elektrotauchlackierung, die aus einer Kombination von aminogruppenhaltigem Bindemittel und einem Vernetzungsmittel auf Basis von Umsetzungsprodukten von Polyphenolen, Formaldehyd und einem sekundären Amin, sind bekannt. So wird in der EP-A-167 029 ein Bindemittel für die kathodische Elektrotauchlackierung beschrieben, bestehend aus einem Gemisch oder Vorkondensat eines primäre und/oder sekundäre Aminogruppen enthaltenden Polymeren (A) sowie einem Vernetzer (B) auf Basis einer phenolischen Mannichbase, hergestellt aus

a) einem oder mehreren mehrkernigen Polyphenolen,

b) Formaldehyd oder einer Formaldehyd liefernden Verbindung und

c) einem oder mehreren sekundären aliphatischen Aminen.

Die hergestellten Lackfilme zeichnen sich allgemein nach dem Einbrennen durch einen guten Korrosionsschutz und durch einen guten Verlauf aus. Jedoch sind die zum Einbrennen benötigten Temperaturen sehr hoch, was in Bezug auf den Energieverbrauch beim Einbrennvorgang ein wesentlicher Nachteil ist. Umsetzungsprodukte aus Carbonsäureamiden oder Urethanen mit Aldehyden und sekundären Aminen sind in "Makromolekulare Chemie", Band 57, Seite 45 (1962) beschrieben. In der DE-A-22 23 427 wird die Verwendung spezieller Typen dieser Umsetzungsprodukte zur Herstellung von Polyurethanschäumen beschrieben.

Aufgabe der vorliegenden Erfindung war es, Überzugsmittel zu entwickeln, die sich bei niedrigen Temperaturen einbrennen lassen.

Überraschenderweise kann die Einbrenntemperatur von Überzugsmitteln, die Umsetzungsprodukte aus Polyurethan, Formaldehyd und sekundärem Amin als Vernetzer enthalten, deutlich gesenkt werden.

Gelöst wurde demnach die Aufgabe durch ein hitzehärtbares Überzugsmittel für die kathodische Elektrotauchlackierung, das durch Protonierung mit Säure wasserverdünnbar ist, enthaltend

A) 50 bis 95 Gew.-% eines primäre und/oder sekundäre Aminogruppen enthaltenden Polymerisations-, Polykondensations- oder Polyadditionsproduktes als Bindemittel und

B) 5 bis 50 Gew.-% eines Vernetzungsmittels, erhältlich durch Umsetzung eines

a) Polyurethans mit

b) Formaldehyd oder einer Formaldehyd liefernden Verbindung und

c) einem oder mehreren sekundären aliphatischen Aminen.

Zu den einzelnen Aufbaukomponenten ist folgendes auszuführen.

Die Aufbaukomponente (A) ist allgemein bekannt und wird beispielsweise in der EP 167 029 ausreichend beschrieben. Sie wird in einer Menge von 50 bis 95 Gew.-%, bevorzugt 60 bis 80 Gew.-% verwendet.

Die zur Herstellung der Aufbaukomponente (B) verwendeten Polyurethane (a) sind erhältlich durch Umsetzung von Polyisocyanaten mit einer Funktionalität von mindestens 2 mit monofunktionellen aromatischen oder aliphatischen Alkoholen. Auch die Verwendung oder Mitverwendung von höherfunktionellen Alkoholen ist möglich. Dadurch werden höhermolekulare Polyurethane erhalten. Beispiele geeigneter Polyisocyanate sind Toluylendiisocyanat, Hexamethylendiisocyanat, Isophorondiisocyanat, Trimethylhexamethylendiisocyanat, 4,4'-Diphenylmethandiisocyanat, Xylylendiisocyanat, trimerisiertes Hexamethylendiisocyanat, trimerisiertes Isophorondiisocyanat und kernhydrierte Derivate der aromatischen Diisocyanate. Weiterhin können geeignete Polyisocyanate durch Reaktion von Polyolen oder Polyaminen mit niedermolekularen Polyisocyanaten hergestellt werden. Auch Mischungen von Polyisocyanaten und/oder Mischungen von Poly- und Monoisocyanaten können verwendet werden.

Beispiele geeigneter aliphatischer Alkohole sind $C_1$-$C_{12}$-Alkanole wie Methanol, Ethanol, Propanol, i-Propanol, i-Butanol und Cyclohexanol.

Beispiele geeigneter aromatischer Alkohole sind Benzylalkohol, Phenol und substituierte Phenole.

Als bevorzugte Polyurethane werden Umsetzungsprodukte aus trimerisiertem Hexamethylendiisocyanat oder Toluylendiisocyanat mit aromatischen Alkoholen wie Phenol oder substituierte Phenole verwendet.

Die Komponenten (b) und (c) sind bereits in der EP-167 029 beschrieben. Um vernetzungsfähige Verbindungen zu erhalten, muß die Aminkomponente (c) eine gewisse Flüchtigkeit besitzen und darf daher nicht zu hochmolekular sein.

Die Umsetzung der Polyurethane mit Formaldehyd oder einer Formaldehyd liefernden Verbindung und dem Dialkylamin erfolgt unter den gleichen Bedingungen, wie sie in der EP-A-167 029 für die Umsetzung von Polyphenolen mit Formaldehyd und Dialkylamin beschrieben sind.

Dabei wird pro Äquivalent, bezogen auf die Urethangruppen im Polyurethan (a), 0,5 bis 1,1, bevorzugt 0,8 bis 1,0 Äquivalente (b) und 0,5 bis 1,1, bevorzugt 0,8 bis 1,0 Äquivalente (c) verwendet.

Die Aufbaukomponente (B) wird in Mengen von 5 bis 50, bevorzugt 20 bis 40 Gew.-% verwendet, wobei die Summe der unter (A) und (B) verwendeten Prozentzahlen 100 ist.

Außer den Komponenten (A) und (B) können weitere Stoffe wie Pigmente, Lackhilfsmittel, Lösemittel und Härtungskatalysatoren zugesetzt werden. Die so hergestellten Überzugsmittel können auch durch übliche Methoden auf Substrate wie Holz, Kunststoff oder Metall aufgebracht werden. Für die Elektrotauchlackierung wird das erfindungsgemäße Überzugsmittel mit den genannten Zusatzstoffen durch Protonieren mit Säure in eine wasserlösliche Form überführt. Als Säuren werden bevorzugt Carbonsäuren wie Ameisensäure, Essigsäure oder Milchsäure verwendet, aber auch anorganische Säuren wie Phosphorsäure, können eingesetzt werden.

Für die kathodische Elektrotauchlackierung wird im allgemeinen ein Feststoffgehalt des Elektrotauchbades von 5 bis 30 Gew.-% eingestellt. Die Abscheidung erfolgt üblicherweise bei Temperaturen zwischen 15 und 40°C, während einer Zeit von 0,5 bis 5 Minuten und bei pH-Werten zwischen 4,0 und 8,5, bevorzugt um den Neutralpunkt, bei Spannungen zwischen 50 und 500 Volt. Der zu beschichtende, elektrisch leitende Körper wird dabei als Kathode geschaltet. Der abgeschiedene Film wird bei Temperaturen von 120 bis 160°C ca. 20 Minuten gehärtet.

Beispiele

Herstellung der erfindungsgemäßen Vernetzungsmittel B

Vernetzungsmittel B1

252 g trimerisiertes Hexamethylendiisocyanat (1,5 Äquivalente NCO) wurden mit 141 g Phenol (1,5 mol) in 151 g Toluol bei 80°C unter Verwendung von 0,4 g Dibutylzinndilaurat als Katalysator bis zur vollständigen Umsetzung der Isocyanatgruppen gerührt (ca. 2 Stunden). Anschließend wurden 46 g Paraformaldehyd (1,5 mol) und 194 g Dibutylamin (1,5 mol) hinzugesetzt und bei 80°C 2 Stunden gerührt. Nach dieser Zeit wurde ein leichtes Vakuum angelegt und das entstandene Reaktionswasser bei 80°C azeotrop abdestilliert. Das entstandene Vernetzungsmittel hatte einen Feststoffgehalt von etwa 75 Gew.-%.

Vernetzungsmittel B2

252 g trimerisiertes Hexamethylendiisocyant (1,5 Äquivalente NCO) wurden mit 186 g 1-Hydroxy-4-Methoxybenzol (1,5 mol) in 16 g Toluol bei 80°C unter Verwendung von 0,9 g Dibutylzinndilaurat als Katalysator bis zur vollständigen Umsetzung der Isocyanatgruppen gerührt (ca. 2 Stunden). Anschließend wurden 46 g Paraformaldehyd (1,5 mol) und 194 g Dibutylamin (1,5 mol) hinzugesetzt und bei 80°C 2 Stunden gerührt. Nach dieser Zeit wurde ein leichtes Vakuum angelegt und das entstandene Reaktionswasser bei 80°C azeotrop abdestilliert. Das entstandene Vernetzungsmittel hatte einen Feststoffgehalt von etwa 80 Gew.-%.

Vernetzungsmittel B3

252 g trimerisiertes Hexamethylendiisocyanat (1,5 Äquivalente NCO) wurden mit 193 g 1-Chlor-4-hydroxybenzol (1,5 mol) in 165 g Toluol bei 80°C unter Verwendung von 0,9 g Dibutylzinndilaurat als Katalysator bis zur vollständigen Umsetzung der Isocyanatgruppen gerührt (ca. 2 Stunden). Anschließend wurden 46 g Paraformaldehyd (1,5 mol) und 194 g Dibutylamin (1,5 mol) hinzugesetzt und bei 80°C 2 Stunden gerührt. Nach dieser Zeit wurde ein leichtes Vakuum angelegt und das entstandene Reaktionswasser bei 80°C azeotrop abdestilliert. Das entstandene Vernetzungsmittel hatte einen Feststoffgehalt von etwa 80 Gew.-%.

Vernetzungsmittel B4

252 g trimerisiertes Hexamethylendiisocyanat (1,5 Äquivalente NCO) wurden mit 111 g iso-Butanol (1,5 mol) in 144 g Toluol bei 80°C unter Verwendung von 0,4 g Dibutylzinndilaurat als Katalysator bis zur vollständigen Umsetzung der Isocyanatgruppen gerührt (ca. 2 Stunden). Anschließend wurden 46 g Paraformaldehyd (1,5 mol) und 194 g Dibutylamin (1,5 mol) hinzugesetzt und bei 80°C 2 Stunden gerührt. Nach dieser Zeit wurde ein leichtes Vakuum angelegt und das entstandene Reaktionswasser bei 80°C azeotrop abdestilliert. Das entstandene Vernetzungsmittel hatte einen Feststoffgehalt von etwa 80 Gew.-%.

Vernetzungsmittel B5

252 g trimerisiertes Hexamethylendiisocyanat (1,5 Äquivalente NCO) wurden mit 165 g Cyclohexanol (1,5 mol) in 175 g Toluol bei 80°C unter Verwendung von 0,9 g Dibutylzinndilaurat als Katalysator bis zur vollständigen Umsetzung der Isocyanatgruppen gerührt (ca. 2 Stunden). Anschließend wurden 46 g Paraformaldehyd (1,5 mol) und 194 g Dibutylamin (1,5 mol) hinzugesetzt und bei 80°C 2 Stunden gerührt. Nach dieser Zeit wurde ein leichtes Vakuum angelegt und das entstandene Reaktionswasser bei 80°C azeotrop abdestilliert. Das entstandene Vernetzungsmittel hatte einen Feststoffgehalt von etwa 80 Gew.-%.

Vernetzungsmittel B6

252 g trimerisiertes Hexamethylendiisocyanat (1,5 Äquivalente NCO) wurden mit 162 g Benzylalkohol (1,5 mol) in 157 g Toluol bei 80°C unter Verwendung von 0,9 g Dibutylzinndilaurat als Katalysator bis zur vollständigen Umsetzung der Isocyanatgruppen gerührt (ca. 2 Stunden). Anschließend wurden 46 g Paraformaldehyd (1,5 mol) und 194 g Dibutylamin (1,5 mol) hinzugesetzt und bei 80°C 2 Stunden gerührt. Nach dieser Zeit wurde ein leichtes Vakuum angelegt und das entstandene Reaktionswasser bei 80°C azeotrop abdestilliert. Das entstandene Vernetzungsmittel hatte einen Feststoffgehalt von etwa 80 Gew.-%.

Vernetzungsmittel B7

131 g Toluylendiisocyanat (1,5 Äquivalente NCO) wurden mit 141 g Phenol (1,5 mol) in 120 g Toluol bei 80°C unter Verwendung von 0,5 g Dibutylzinndilaurat als Katalysator bis zur vollständigen Umsetzung der Iso cyanatgruppen gerührt (ca. 2 Stunden). Anschließend wurden 46 g Paraformaldehyd (1,5 mol) und 194 Teile Dibutylamin (1,5 mol) hinzugesetzt und bei 80°C 2 Stunden gerührt. Nach dieser Zeit wurde ein leichtes Vakuum angelegt und das entstandene Reatkionswasser bei 80°C azeotrop abdestilliert. Das entstandene Vernetzungsmittel hatte einen Feststoffgehalt von etwa 80 Gew.-%.

Als Vergleichsbeispiel wurde ein Vernetzungsmittel nach der EP-A-0 167 029, Beispiel B5, hergestellt.

Komponente A

Als geeignetes Lackharz wurde das in der EP 0 167 029 im Beispiel A beschriebene NH-Gruppen enthaltende Lackharz verwendet.

Beispiele 1 bis 8

Die folgenden Beispiele zeigen die Anwendung der erfindungsgemäßen Bindemittelzusammensetzungen in kathodisch abscheidbaren Elektrotauchlacken:
Es wurde zunächst eine Pigmentpaste hergestellt, indem in einer Kugelmühle
110 Teile der Komponente (A1)
36 Teile Ethylenglykolmonobutylether
3 Teile Essigsäure
145 Teile Rutil
35 Teile Aluminiumsilikat
10 Teile Bleisilikat

4

2,5 Teile Ruß

170 Teile Wasser

bis zu einer Kornfeinheit von <7μm vermahlen wurden.

Die Komponente (A) wurde mit der jeweiligen Komponente (B) in solchen Mengen gemischt, daß die resultierende Mischung 137 g Feststoff im Mischungsverhältnis 70 % Komponente (A) und 30 % Komponente (B) enthielt. Es wurden 4,1 g Essigsäure zugesetzt und mit 300 g entionisiertem Wasser unter Rühren eine Dispersion hergestellt. Dann wurden 139 g der oben angegebenen Pigmentpaste zugesetzt und mit entionisiertem Wasser auf 1000 g aufgefüllt. Die so hergestellten Elektrotauchbäder wurden 2 Tage bei 27°C gerührt. Dann wurde bei 280 Volt während 2 Minuten ein als Kathode gehaltetes Blech beschichtet und anschließend während 20 Minuten bei den in der Tabelle angegebenen Temperaturen eingebrannt. Die folgende Tabelle zeigt die Ergebnisse:

Tabelle

| Technische Prüfung der eingebrannten Lackfilme | | | |
|---|---|---|---|
| Beispiele | Vernetzungsmittel | Einbrenntemperatur [°C] | Lösemittelbeständigkeit |
| 1 | B 1 | 120 | 2 |
|  |  | 140 | 1 |
|  |  | 160 | 1 |
| 2 | B 2 | 140 | 2 |
|  |  | 160 | 1 |
| 3 | B 3 | 140 | 2 |
|  |  | 160 | 1 |
| 4 | B 4 | 160 | 1 |
| 5 | B 5 | 160 | 3 |
| 6 | B 6 | 160 | 3 |
| 7 | B 7 | 120 | 1 |
|  |  | 140 | 1 |
|  |  | 160 | 1 |
| 8 (Vergleich) | EP 167 029 (B 5) | 140 | 3 |
|  |  | 160 | 2 |
| Benotung: | | | |
| Lösemittelbeständigkeit: Note 1 = nicht angegriffen, Note 2 = leicht angegriffen, Note 3 = stark angegriffen. Benotung nach 100 Doppelhüben mit einem acetongetränkten Wattebausch. | | | |

## Ansprüche

1. Hitzehärtbares Überzugsmittel für die kathodische Elektrotauchlackierung, das durch Protonieren mit Säure wasserverdünnbar ist, enthaltend

A) 50 bis 95 Gew.-% eines primäre und/oder sekundäre Aminogruppen enthaltenden Polymerisations-, Polykondensations- oder Polyadditionsproduktes als Bindemittel

B) 5 bis 50 Gew.-% eines Vernetzungsmittels, erhältlich durch Umsetzung eines

a) Polyurethans mit

b) Formaldehyd oder einer Formaldehyd liefernden Verbindung und

c) einem oder mehreren sekundären aliphatischen Aminen.

2. Überzugsmittel nach Anspruch 1, enthaltend ein Vernetzungsmittel (B), erhältlich unter Verwendung von 0,5 bis 1,1 Äquivalenten (b) und 0,5 bis 1,1 Äquivalenten (c) pro Äquivalent Polyurethan (a).

3. Überzugsmittel nach Anspruch 1 oder 2, enthaltend eine Komponente (B), erhältlich unter Verwendung eines Polyurethans (a), das durch Umsetzung von Polyisocyanaten mit aliphatischen oder aromatischen Alkoholen hergestellt wurde.

4. Überzugsmittel nach einem der Ansprüche 1 bis 3, enthaltend eine Komponente (B), erhältlich unter Verwendung eines Polyurethans (a), zu dessen Herstellung trimerisiertes Hexamethylendiisocyanat verwendet wurde.

5. Überzugsmittel nach einem der Ansprüche 1 bis 4, enthaltend ein weiteres Vernetzungsmittel.

6. Überzugsmittel, erhältlich durch partielle Umsetzung der Komponente (A) und (B).

7. Verwendung des Überzugsmittels gemäß einem der Ansprüche 1 bis 6 zur Herstellung hitzehärtbarer Überzüge.

8. Verwendung des Überzugsmittels gemäß einem der Ansprüche 1 bis 6 in Form einer wäßrigen Dispersion, die gegebenenfalls zusätzlich Pigmente, Füllstoffe, Korrosionsinhibitoren, übliche Lackhilfsmittel und/oder Lösemittel für die kathodische Elektrotauchlackierung elektrisch leitfähiger Substrate.

9. Beschichteter Gegenstand, erhältlich unter Verwendung eines Überzugsmittels gemäß einem der Ansprüche 1 bis 6.

Patentansprüche für folgenden Vertragsstaat: ES

1. Verfahren zur Herstellung eines hitzehärtbaren Überzugsmittels für die kathodische Elektrotauchlackierung, welches durch Protonieren mit Säure wasserverdünnbar ist, dadurch gekennzeichnet, daß man eine Mischung aus 50 bis 95 Gew.-% eines primäre und/oder sekundäre Aminogruppen enthaltenden Polymerisations-, Polykondensations- oder Polyadditionsproduktes als Bindemittel A und 5 bis 50 Gew.-% eines Vernetzungsmittels B, erhältlich durch Umsetzung eines
a) Polyurethans mit
b) Formaldehyd oder einer Formaldehyd liefernden Verbindung und
c) einem oder mehreren sekundären aliphatischen Aminen,
verwendet.

2. Verfahren zur Herstellung eines Überzugsmittels nach Anspruch 1, dadurch gekennzeichnet, daß Vernetzungsmittel (B), unter Verwendung von 0,5 bis 1,1 Äquivalenten (b) und 0,5 bis 1,1 Äquivalenten (c) pro Äquivalent Polyurethan (a) erhältlich ist.

3. Verfahren zur Herstellung eines Überzugsmittels nach Anspruch 1 oder 2, dadurch gekennzeichnet, daß Komponente (B), unter Verwendung eines Polyurethans (a), das durch Umsetzung von Polyisocyanaten .mit aliphatischen oder aromatischen Alkoholen hergestellt wurde, erhältlich ist.

4. Verfahren zur Herstellung eines Überzugsmittels nach einem der Ansprüche 1 bis 3, dadurch gekennzeichnet, daß eine Komponente (B) unter Verwendung eines Polyurethans (a), zu dessen Herstellung trimerisiertes Hexamethylendiisocyanat verwendet wurde, erhältlich ist.

5. Verfahren zur Herstellung eines Überzugsmittels nach einem der Ansprüche 1 bis 4, dadurch gekennzeichnet, daß ein weiteres Vernetzungsmittel enthalten ist.

6. Verfahren zur Herstellung hitzehärtbarer Überzüge, dadurch gekennzeichnet, daß ein Überzugsmittel gemäß einem der Ansprüche 1 bis 5 verwendet wird.

7. Verfahren zur Herstellung hitzehärtbarer Überzüge, dadurch gekennzeichnet, daß man Überzugsmittel gemäß einem der Ansprüche 1 bis 5 in Form einer wäßrigen Dispersion verwendet, die gegebenenfalls zusätzlich Pigmente, Füllstoffe, Korrosionsinhibitoren, übliche Lackhilfsmittel und/oder Lösemittel für die kathodische Elektrotauchlackierung elektrisch leitfähiger Substrate enthält.